**Europäisches Patentamt**

**European Patent Office**

**Office européen des brevets**

(19)

(11) Numéro de publication : **0 326 459 B1**

## FASCICULE DE BREVET EUROPEEN

(12)

(45) Date de publication du fascicule du brevet :
**16.12.92 Bulletin 92/51**

(51) Int. Cl.$^5$ : **H02H 3/04,** H02H 3/08,
H02H 3/093

(21) Numéro de dépôt : **89400136.1**

(22) Date de dépôt : **18.01.89**

(54) **Déclencheur statique comportant un circuit de déclenchement instantané indépendant de la tension d'alimentation.**

(30) Priorité : **28.01.88 FR 8801152**

(43) Date de publication de la demande :
**02.08.89 Bulletin 89/31**

(45) Mention de la délivrance du brevet :
**16.12.92 Bulletin 92/51**

(84) Etats contractants désignés :
**DE ES GB IT SE**

(56) Documents cités :
**DE-A- 2 403 903**
**GB-A- 2 074 804**
**US-A- 4 068 283**

(73) Titulaire : **MERLIN GERIN**
**2, chemin des Sources**
**F-38240 Meylan (FR)**

(72) Inventeur : **Tripodi, Paul**
**Merlin Gerin Sce. Brevets**
**F-38050 Grenoble Cédex (FR)**
Inventeur : **Weynachter, Luc**
**Merlin Gerin Sce. Brevets**
**F-38050 Grenoble Cédex (FR)**

(74) Mandataire : **Kern, Paul et al**
**Merlin Gerin Sce. Brevets 20, rue Henri Tarze**
**F-38050 Grenoble Cédex (FR)**

# Description

L'invention concerne un déclencheur statique pour un disjoncteur électrique comportant un circuit de détection de courant délivrant des signaux analogiques proportionnels au courant parcourant les conducteurs à protéger, un circuit de redressement, de mesure de d'alimentation connecté au circuit de détection de courant et délivrant entre des bornes de mesure au moins une tension de mesure, un ensemble électronique de traitement, alimenté par le circuit de redressement, de mesure et d'alimentation, et auquel est appliquée la tension de mesure, de manière à ce qu'il délivre sur une borne de sortie, avec ou sans retard, un ordre de déclenchement du disjoncteur en cas de dépassement de seuils prédéterminés par ladite tension de mesure, une bobine de déclenchement montée en série avec un thyristor étant alimentée par le circuit de redressement, de mesure et d'alimentation, la borne de sortie de l'ensemble électronique de traitement étant connectée à la gâchette du thyristor, de manière à ce que la bobine de déclenchement provoque l'ouverture du disjoncteur lorsqu'un ordre de déclenchement est délivré par l'ensemble électronique de traitement.

Dans les déclencheurs statiques connus (voir par exemple GB-A-2 074 804), la bobine de déclenchement et le thyristor sont connectés en série entre des bornes de sortie du circuit d'alimentation, un ordre de déclenchement étant appliqué à la gâchette du thyristor.

Or, le circuit d'alimentation ne fournit une tension d'alimentation suffisante qu'un certain temps après la fermeture du disjoncteur. A titre d'exemple, un temps de montée de la tension d'alimentation d'environ 35 ms peut être considéré comme typique. Lorsque l'ensemble de traitement électronique du déclencheur comporte un microprocesseur, celui-ci nécessite de plus un temps d'initialisation relativement long après sa mise sous-tension, typiquement 30 à 50 ms, et ne peut donc fournir d'ordre de déclenchement fiable pendant cette période.

Ceci pose un problème lorsque l'on désire réaliser des essais de coupure avec des déclencheurs statiques. En effet, le fonctionnement du déclencheur est alors masqué et retardé par le temps de montée de la tension d'alimentation. Or il est indispensable qu'un courant de court-circuit important soit détecté instantanément par le déclencheur.

L'invention a donc pour but un déclencheur statique à propre courant comportant un circuit de déclenchement instantané capable de fonctionner même en l'absence de tension d'alimentation.

Selon l'invention ce but est atteint par le montage du thyristor en cathode volante, la tension de mesure étant appliquée entre la masse et la cathode du thyristor, une diode Zener dont l'anode est connectée à la gâchette du thyristor, et dont la cathode est connectée à la masse déterminant un seuil de déclenchement instantané du déclencheur.

Selon un mode de réalisation préférentiel, le circuit de redressement, de mesure et d'alimentation comporte un circuit redresseur dont les entrées sont connectées aux sorties du circuit de détection de courant, un circuit d'alimentation étant disposé en série avec un circuit de mesure, délivrant la tension de mesure, entre les bornes de sortie positive et négative du circuit redresseur, le point commun aux circuits d'alimentation et de mesure étant relié à la masse. Le circuit de mesure est de préférence constitué par une simple résistance connectée entre la borne négative du circuit redresseur et la masse. Ainsi, tandis que la bobine de déclenchement est alimentée par une tension positive par rapport à la masse fournie par le circuit d'alimentation, une tension négative variable, représentative du courant parcourant le conducteur à protéger, est appliquée sur la cathode du thyristor, sa gâchette étant, en l'absence d'ordre de déclenchement en provenance de l'ensemble électronique de traitement, maintenue à une tension négative par la diode Zener. Lorsque l'amplitude de la tension négative de mesure appliquée sur la cathode du thyristor dépasse un certain seuil, fixé par la diode Zener, il y a amorçage du thyristor et déclenchement du disjoncteur.

Lorsque le déclencheur est destiné à un disjoncteur électrique multipolaire, on peut soit utiliser une résistance de mesure unique, soit une résistance de mesure par phase. Dans ce dernier cas, le circuit de détection de courant comportant un capteur de courant par pôle, le circuit de redressement, de mesure et d'alimentation comporte une pluralité de ponts redresseurs associés respectivement auxdits pôles, et dont les entrées sont respectivement connectées aux sorties du capteur de courant associé, un pont redresseur associé à un pôle étant connecté en série avec une résistance de mesure indépendante associée aux bornes d'un circuit d'alimentation commun, les extrémités des résistances de mesure connectées au circuit d'alimentation étant connectées à la masse, les autres extrémités des résistances de mesure étant respectivement connectées aux cathodes d'une pluralité de diodes associées dont les anodes sont connectées à la cathode du thyristor de manière à ce que seule la tension de mesure de plus grande amplitude soit appliquée sur la cathode du thyristor.

Selon un mode de réalisation préféré, le déclencheur peut de plus comporter un circuit de modification temporaire du seuil de déclenchement instantané. Dans ce but, une résistance est disposée entre la cathode de la diode Zener et la masse, une autre résistance étant disposée en série avec un condensateur entre la cathode de la diode Zener et la cathode du thyristor.

D'autres avantages et caractéristiques ressortiront plus clairement de la description qui va suivre de différents modes de réalisation de l'invention, donnés à titre d'exemples non limitatifs et représentés aux dessins annexés, sur lesquels:

La figure 1 est un schéma bloc d'un déclencheur statique selon l'invention.

La figure 2 représente une variante de réalisation d'un circuit de redressement, de mesure et d'alimentation d'un déclencheur statique selon l'invention destiné à un disjoncteur multipolaire.

La figure 3 représente une variante de réalisation d'un déclencheur statique pour disjoncteur multipolaire selon l'invention.

la figure 4 représente une partie du déclencheur selon la figure 1, muni d'un circuit de modification temporaire du seuil de déclenchement instantané.

La figure 5 illustre la variation du seuil instantané du déclencheur selon la figure 4.

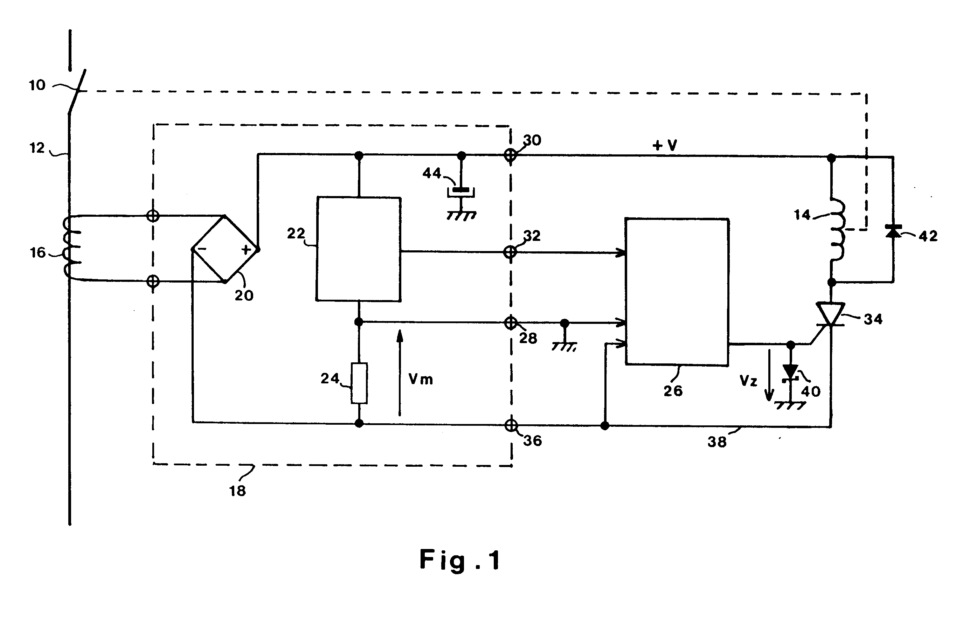

Sur la figure 1, un disjoncteur 10 de protection d'au moins un conducteur 12 est actionné par un mécanisme de commande piloté par une bobine de déclenchement 14, de manière à commander le déclenchement du disjoncteur en cas de surcharge ou de court-circuit.

L'intensité du courant dans le conducteur 12 est détectée par un transformateur de courant 16 dont l'enroulement primaire est constitué par le conducteur à protéger et dont l'enroulement secondaire fournit un signal représentatif du courant. Ce signal est appliqué à l'entrée d'un circuit de redressement, de mesure et d'alimentation 18.

Le circuit 18 comporte un circuit redresseur qui, dans le cas d'un disjoncteur monopolaire est constitué par un pont redresseur 20 à double alternance dont les entrées alternatives reçoivent le signal de sortie du transformateur de courant 16.

Le signal redressé est appliqué à un circuit d'alimentation 22 et à une résistance de mesure 24. Le signal de mesure Vm aux bornes de la résistance de mesure 24, représentatif du courant parcourant le conducteur 12 est fourni à un ensemble électronique de traitement 26. Le circuit 18 délivre également, entre des bornes 28 et 30 de sortie, une première tension d'alimentation. Une seconde tension d'alimentation, dérivée de la première, est généralement disponible entre une borne de sortie 32 du circuit 18 et la borne 28 pour alimenter l'ensemble de traitement 26. Dans le cas d'un ensemble électronique de traitement 26 à microprocesseur, cette seconde tension est de préférence voisine de 5 V.

Dans le cas d'un disjoncteur multipolaire, un transformateur de courant est associé à chaque conducteur du réseau à protéger et les signaux de sortie des différents transformateurs sont appliqués au circuit de redressement, de mesure et d'alimentation 18.

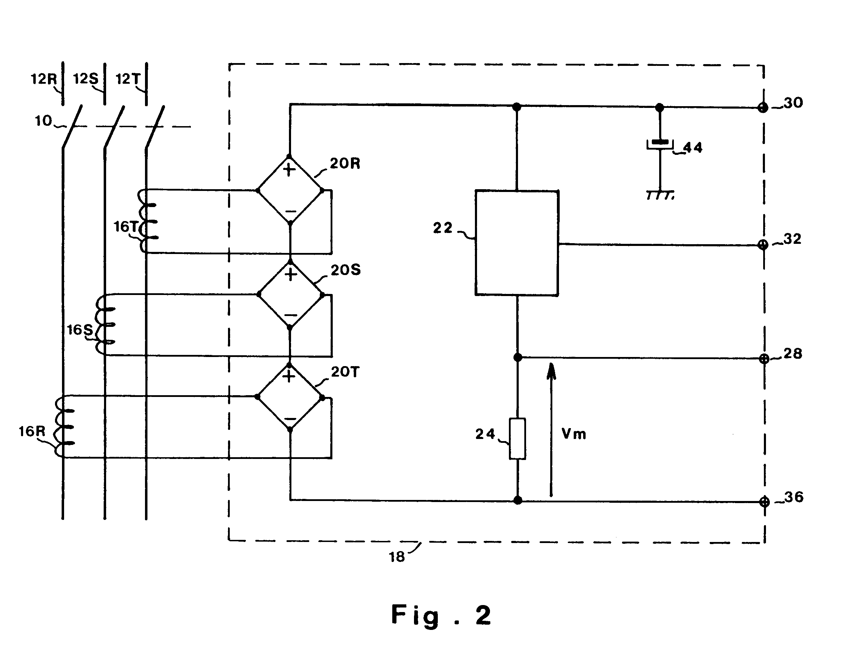

Sur la figure 2, le disjoncteur 10 est destiné à protéger les conducteurs 12 R, 12 S, et 12 T d'un réseau alternatif triphasé. L'intensité du courant circulant dans chaque conducteur est contrôlée par un transformateur de courant associé 16 R, 16 S et 16 T dont l'enroulement secondaire est connecté à un pont redresseur 20 R, 20 S et 20 T, à double alternance. Les sorties des ponts redresseurs sont mises en série et le signal redressé total est appliqué au circuit d'alimentation 22 et à la résistance de mesure 24. Dans ce cas, le signal de mesure Vm est représentatif du courant le plus élevé parcourant l'un des conducteurs.

Bien entendu le même principe s'applique quel que soit le nombre de conducteurs du réseau.

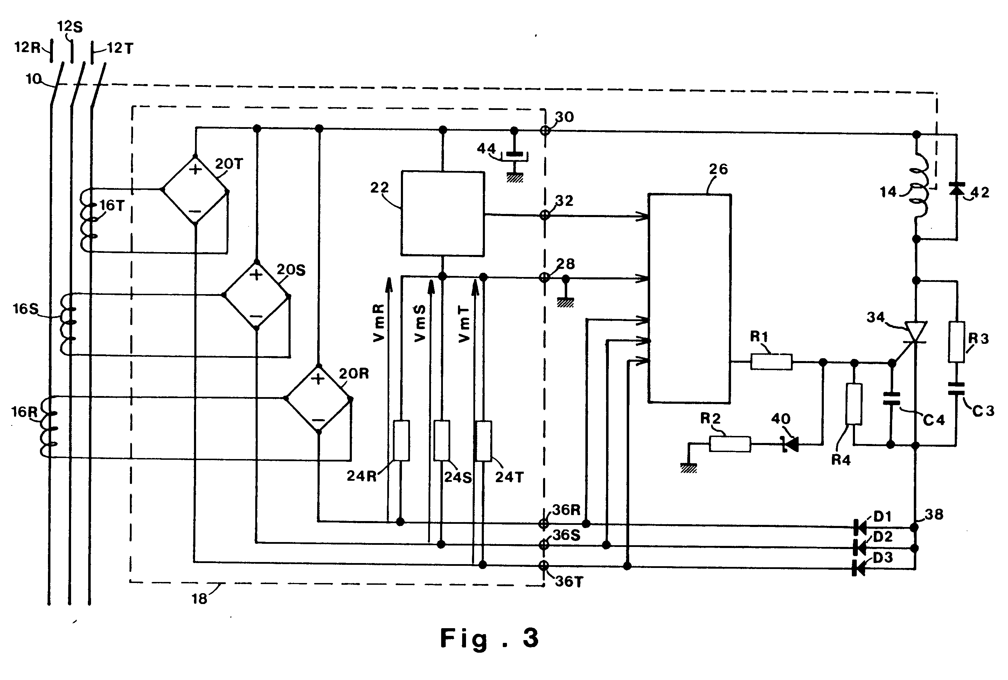

Il est également possible (figure 3) de fournir à l'ensemble électronique de traitement 26 une mesure indépendante Vm R, Vm S et Vm T, pour chaque phase. Une résistance de mesure indépendante 24 R, 24 S , 24 T est alors associée à chacun des ponts redresseurs. Chaque pont redresseur est connecté en série avec la résistance de mesure associée aux bornes du circuit d'alimentation commun 22.

L'ensemble éléctronique de traitement 26 assure, de manière connue, les fonctions de déclenchement long retard, court retard, et éventuellement de protection différentielle, de manière à élaborer un ordre de déclenchement du disjoncteur 10 lors d'un dépassement de seuils prédéterminés. L'ordre de déclenchement ainsi produit est appliqué par l'ensemble 26 sur la gâchette d'un thyristor 34 connecté en série avec la bobine de déclenchement 14.

De tels ensembles de traitement sont bien connus, qu'ils soient de type analogique comme dans le brevet français n° 2530089 ou de type numérique, à microprocesseur, comme dans le brevet français n° 2578092.

Selon l'invention il est prévu de modifier un déclencheur de ce type de manière à ce qu'il comporte un circuit de déclenchement instantané indépendant de la tension d'alimentation.

Comme représenté sur les figures 1 et 3, le thyristor 34 est monté à cathode volante. En effet, la bobine de déclenchement 14 et le thyristor 34 ne sont pas connectés en série entre les bornes de sortie 28 et 30 du circuit d'alimentation 22 comme dans les déclencheurs connus.

La borne de sortie 28 du circuit d'alimentation étant reliée à la masse, la résistance de mesure 24 (figures 1 et 2) est connectée entre la borne négative du circuit redresseur et la masse. La tension de mesure Vm est ainsi disponible entre la masse (borne de sortie 28) et une borne de sortie 36 directement reliée à la borne négative du circuit redresseur. Dans le cas d'un disjoncteur multipolaire avec une mesure indépendante dans chaque phase, les tensions de mesure Vm R, Vm S et Vm T sont respectivement disponibles entre la borne 28 de masse et des bornes 36 R, 36 S et 36 T respectivement reliées directement à la borne négative du pont redresseur associé 20 R, 20 S ou 20 T.

La bobine de déclenchement 14 et le thyristor 34 sont connectés en série entre la borne de sortie 30 et un conducteur 38. Lorsqu'il n'existe qu'une seule résistance de mesure 24 (figures 1 et 2), le conducteur 38 est connecté directement à la borne de sortie 36.

Ainsi, la tension appliquée à la cathode du thyristor est variable et dépend de la tension de mesure Vm. L'anode d'une diode Zener 40 est connectée à la gâchette du thyristor 34, sa cathode étant connectée à la masse. En l'absence d'un ordre de déclenchement, positif par rapport à la masse, appliqué sur la gâchette par l'ensemble du traitement 26, la gâchette est à une tension inférieure à |- Vz|, négative par rapport à la masse, Vz étant fixée par la diode Zener 40. Tant que la tension - Vm appliquée à la cathode du thyristor est, en valeur absolue, inférieure à la tension Vz, le thyristor reste bloqué. En cas de court-circuit dans le conducteur à protéger, la tension Vm, proportionnelle au courant de court-circuit, dépasse la tension de seuil constituée par la somme de la tension Vz et de la tension de seuil VGK propre au thyristor, et entraîne l'amorçage du thyristor et le passage du courant dans la bobine de déclenchement 14 entraînant l'ouverture du disjoncteur 10.

On obtient ainsi un circuit de déclenchement instantané dont le seuil est déterminé par la diode Zener 40.

Au moment du déclenchement, le thyristor étant conducteur, la tension présente entre la borne d'alimentation 30 et le conducteur 38, c'est à dire la tension appliquée aux bornes de la bobine de déclenchement 14, est égale à la somme de la tension d'alimentation V présente sur la borne 30 et de la tension de mesure Vm.

Pour obtenir un déclenchement du disjoncteur, il suffit que la tension aux bornes de la bobine de déclenchement 14 soit supérieure à la tension de décollement de la bobine. Celle-ci est de préférence du type basse impédance, ayant une tension de décollement très faible, pouvant descendre jusqu'à 1 V. Dans le cas d'un court-circuit devant conduire à un déclenchement instantané, la tension de mesure Vm est, à elle seule, très supérieure à la tension de décollement de la bobine et suffit, même en l'absence de la tension d'alimentation V à provoquer le déclenchement du disjoncteur.

Ainsi, en l'absence de la tension d'alimentation + V, ou tant que celle-ci est insuffisante, la tension de mesure Vm sert à la fois de mesure du courant, pour la comparaison à un seuil de déclenchement fixé par la diode Zener 40, et de tension d'alimentation de la bobine de déclenchement.

Comme représenté sur la figure 1, une diode 42 est, de manière classique, montée en parallèle sur la bobine de déclenchement 14. Le condensateur 44, connecté entre la borne d'alimentation 30 et la masse sert, en fonctionnement normal du déclencheur, à stabiliser la tension d'alimentation V, et à fournir l'énergie de déclenchement en cas de défaut long retard, court retard ou différentiel.

Dans le cas où le circuit 18 délivre une tension de mesure Vm R, VmS, Vm T, indépendante pour chaque phase (figure 3), le conducteur 38 est connecté aux anodes de diodes D1, D2, D3, dont la cathode est respectivement reliée aux bornes 36 R, 36 S, 36 T. Les diodes forment ainsi un circuit OU analogique, appliquant sur la cathode du thyristor 34, la tension détectée Vm R, Vm S ou Vm T d'amplitude maximum.

Le fonctionnement est alors le même que dans le circuit déclencheur instantané selon la figure 1, la tension directe aux bornes des diodes s'ajoutant à la tension Vz et à la tension de seuil VGK pour la fixation du seuil de déclenchement instantané.

Dès que l'une des tensions de mesure dépasse ce seuil de déclenchement instantané, le thyristor 34 est amorcé et la bobine de déclenchement 14 parcourue par un courant suffisant pour provoquer l'ouverture du disjoncteur 10, quelle que soit la valeur de la tension d'alimentation V.

Comme représenté sur la figure 3, une résistance R1 peut être introduite entre la sortie de déclenchement de l'ensemble de traitement 26 et la gâchette du thyristor, de manière à limiter le courant de gâchette. De même une résistance R2 de limitation du courant peut être connectée en série avec la diode Zener 40 entre la gâchette et la masse.

Des circuits RC d'antiparasitage sont de préférence connectés entre l'anode et la cathode du thyristor 34 d'une part - résistance R3 et condensateur C3 en série, et entre la gâchette et la cathode du thyristor d'autre part - résistance R4 en parallèle sur un condensateur C4.

Il peut de plus être avantageux de munir le circuit de déclenchement instantané décrit ci-dessus d'une sélectivité provisoire, dite sélectivité "override", pendant un temps très court, lors de la détection d'un court-circuit, de manière à permettre éventuellement l'ouverture d'un disjoncteur aval si le défaut, bien que supérieur à un premier seuil de déclenchement instantané, sensiblement égal à Vz, est inférieur à un second seuil de déclenchement supérieur au premier.

Pour celà on prévoit une élévation temporaire du seuil de déclenchement S lors de la détection d'un défaut par la résistance de mesure.

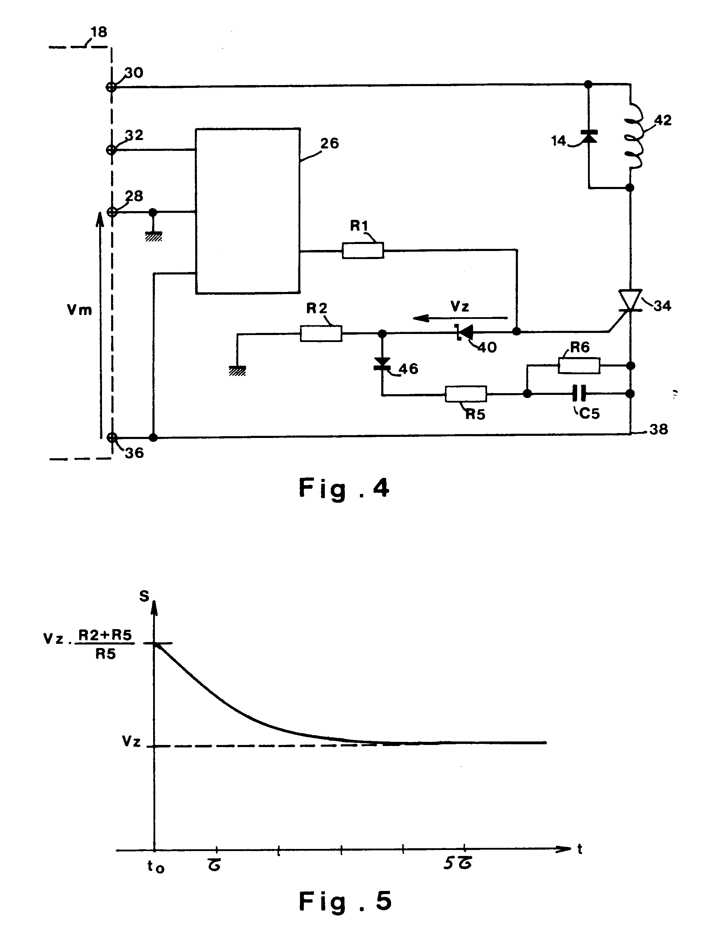

Comme représenté sur la figure 4, ceci est obtenu au moyen d'un circuit, comportant en série une résistance R5 et un condensateur C5, connecté entre la cathode du thyristor 34 et le point commun à la cathode de la diode Zener 40 et une résistance R2 interposée entre la diode Zener et la masse.

En l'absence de défaut, la tension de mesure Vm est nulle et le condensateur C5 est déchargé, aucun courant ne parcourant les résistances R5 et R2. Lors de l'apparition d'un défaut, à l'instant "to", la tension Vm n'est plus nulle et un courant de charge traverse le condensateur C5, la résistance R5 et la résistance R2.

Si l'on néglige la tension VGK et, dans le circuit selon la figure 3, la chute de tension dans les diodes D1, D2, D3, la valeur absolue de la tension de seuil S que Vm doit atteindre pour amorcer le thyristor 34 est alors donnée par:

$$S = Vz \cdot (R5 + R2) / R5$$

Le condensateur C5 se chargeant avec une constante du temps $\tau = (R2 + R5)$ C5, au bout d'un temps $t = \tau$, la tension aux bornes du condensateur est égale à Vm et le seuil S revient à Vz. A titre d'exemple nullement limitatif, on peut choisir une constante de temps de charge du condensateur voisine de 10 ms.

La figure 5 illustre la variation du seuil de déclenchement en fonction du temps. On voit que le seuil est élevé lors de la détection du défaut, à l'instant to, ce seuil diminuant très rapidement pour revenir à sa valeur nominale Vz au bout d'un temps correspondant à 5 fois la constante de temps de charge du condensateur C5.

Une résistance de décharge R6, de valeur très supérieure à la résistance R5, est connectée en parallèle sur le condensateur C5, de manière à permettre une décharge du condensateur lorsque le défaut a disparu.

La tension de mesure Vm étant une tension redressée double alternance, son amplitude varie sinusoïdalement pendant une demi-période. Pour éviter une décharge du condensateur C5 après le passage de la tension Vm par sa valeur crête, on introduit une diode 46 en série avec la résistance R5 et le condensateur C5.

A titre d'exemple, la valeur de la tension Vz peut être voisine de 6 ou 7 V, la tension d'alimentation V étant de l'ordre de 20 V.

## Revendications

1. Déclencheur statique pour un disjoncteur électrique (10) comportant un circuit de détection de courant (16) délivrant des signaux analogiques proportionnels au courant parcourant les conducteurs (12) à protéger, un circuit (18) de redressement, de mesure et d'alimentation connecté au circuit de détection de courant et délivrant entre des bornes de mesure (28, 36) au moins une tension de mesure (Vm), un ensemble électronique de traitement (26), alimenté par le circuit (18) de redressement, de mesure et d'alimentation, et auquel est appliquée la tension de mesure (Vm) de manière à ce qu'il délivre sur une borne de sortie, avec ou sans retard, un ordre de déclenchement du disjoncteur en cas de dépassement de seuils prédéterminés par ladite tension de mesure, une bobine de déclenchement (14) montée en série avec un thyristor (34) étant alimentée par le circuit (18) de redressement, de mesure et d'alimentation, la borne de sortie de l'ensemble électronique de traitement (26) étant connectée à la gâchette du thyristor, de manière à ce que la bobine de déclenchement (14) provoque l'ouverture du disjoncteur (10) lorsqu'un ordre de déclenchement est délivré par l'ensemble électronique de traitement, déclencheur caractérisé en ce que le thyristor (34) est monté à cathode volante, la tension de mesure (Vm) étant appliquée entre la masse et la cathode (38) du thyristor, une diode Zener (40) dont l'anode est connectée à la gâchette du thyristor et dont la cathode est connectée à la masse déterminant un seuil de déclenchement instantané du déclencheur.

2. Déclencheur selon la revendication 1, caractérisé en ce que le circuit (18) de redressement, de mesure et d'alimentation comporte un circuit redresseur (20) dont les entrées sont connectées aux sorties du circuit de détection de courant, un circuit d'alimentation (22) étant disposé en série avec un circuit de mesure (24), délivrant la tension de mesure (Vm), entre les bornes de sortie positive et négative du circuit redresseur, le point commun aux circuits d'alimentation (22) et de mesure (24) étant relié à la masse.

3. Déclencheur selon la revendication 2, caractérisé en ce que le circuit de mesure (24) est constitué par une résistance (24) connectée entre la borne négative du circuit redresseur (20) et la masse.

4. Déclencheur selon l'une des revendications 2 et 3, pour un disjoncteur électrique multipolaire, caractérisé en ce que le circuit de détection de courant comporte un capteur de courant (16 R, 16 S, 16 T) par pôle, le circuit redresseur (20) étant constitué par la mise en série de ponts redresseurs double alternance (20 R, 20 S, 20 T) dont les entrées sont respectivement connectées aux sorties du capteur de courant associé.

5. Déclencheur selon la revendication 1 pour un disjoncteur électrique multipolaire, caractérisé en ce que le circuit de détection de courant comporte un capteur de courant (16 R, 16 S, 16 T) par pôle, le circuit (18) de redressement, de mesure et d'alimentation comportant une pluralité de ponts redresseurs (20 R, 20 S, 20 T) associés respectivement auxdits pôles, et dont les entrées sont respectivement connectées aux sorties du capteur de courant associé, un pont redresseur associé à un pôle étant connecté en série avec une résistance de mesure (24 R, 24 S, 24 T) indépendante associée aux bornes d'un circuit d'alimentation (22) commun, les extrémités des résistances de mesure connectées au circuit d'alimentation étant connectées à la masse, les autres extrémités des résistances de mesure étant respectivement connectées aux cathodes d'une pluralité de diodes associées (D1, D2, D3) dont les anodes sont connectées à la cathode du thyristor (34) de manière à ce que seule la tension de mesure de plus grande amplitude soit appliquée sur la cathode du thyristor.

6. Déclencheur selon l'une quelconque des revendications 1 à 5, caractérisé en ce qu'il comporte une première résistance de limitation (R1) entre la borne de sortie de l'ensemble électronique de traitement et la gâchette du thyristor (34).

7. Déclencheur selon l'une quelconque des revendications 1 à 6, caractérisé en ce qu'il comporte une seconde résistance de limitation (R2) en série avec la diode Zener, entre la gâchette du thyristor et la masse.

8. Déclencheur selon l'une quelconque des revendications 1 à 6, caractérisé en ce qu'il comporte un circuit de modification temporaire du seuil de déclenchement instantané comportant une seconde résistance (R2) disposée entre la cathode de la diode Zener et la masse, une troisième résistance (R5) étant disposée en série avec un condensateur (C5) entre la cathode de la diode Zener et la cathode (38) du thyristor.

9. Déclencheur selon la revendication 8, caractérisé en ce qu'il comporte une quatrième résistance (R6), de décharge, de valeur élevée, en parallèle sur le condensateur (C5).

10. Déclencheur selon l'une des revendications 8 et 9, caractérisé en ce qu'il comporte une diode (46) connectée en série avec la troisième résistance (R5) et le condensateur (C5).

**Patentansprüche**

1. Elektronischer Auslöser für einen Leistungsschalter (10), bestehend aus einem Strommeßkreis (16) zur Bereitstellung von analogen, dem Strom in den zu schützenden Leitern (12) proportionalen Signalen, einer mit dem Strommeßkreis verbundenen und an Meßanschlüssen (28, 36) mindestens eine Meßspannung (Vm) bereitstellende Gleichrichter-, Meß- und Stromversorgungsschaltung (18), einer von der Gleichrichter-, Meß- und Stromversorgungsschaltung (18) gespeisten und mit der Meßspannung (Vm) beaufschlagten elektronischen Signalverarbeitungsschaltung (26), die bei Überschreiten bestimmter Schwellwerte durch die genannte Meßspannung (Vm) an einer Ausgangsklemme einen verzögerten oder unverzögerten Auslösebefehl für den Leistungsschalter liefert, einer von der Gleichrichter-, Meß- und Stromversorgungsschaltung (18) gespeisten und mit einem Thyristor (34) in Reihe geschalteten Auslösespule (14), wobei die Ausgangsklemme der elektronischen Signalverarbeitungseinheit (26) mit dem Gate-Anschluß des Thyristors verbunden ist, so daß die Auslösespule (14) bei Abgabe eines Auslösebefehls durch die elektronische Signalverarbeitungseinheit das Öffnen des Leistungsschalters (10) bewirkt, dadurch gekennzeichnet, daß der Thyristor (34) mit freier Kathode geschaltet ist, die Meßspannung (Vm) zwischen Masse und Kathode (38) des Thyristors angelegt wird und zur Festlegung eines Schwellwerts für das unverzögerte Ansprechen des Auslösers eine Zenerdiode (40) verwendet wird, deren Anode mit dem Gate-Anschluß des Thyristors und deren Kathode mit Masse verbunden sind.

2. Auslöser nach Anspruch 1, dadurch gekennzeichnet, daß die Gleichrichter-, Meß- und Stromversorgungsschaltung (18) eine Gleichrichterschaltung (20), deren Eingänge mit den Ausgängen des Strommeßkreises verbunden sind, und eine Stromversorgungsschaltung (22), die mit einer die Meßspannung Vm bereitstellenden Meßschaltung (24) zwischen der positiven und der negativen Ausgangsklemme der Gleichrichterschaltung in Reihe liegt, umfaßt, und daß der gemeinsame Anschlußpunkt der Stromversorgungsschaltung (22) und der Meßschaltung (24) an Masse liegt.

3. Leistungsschalter nach Anspruch 2, dadurch gekennzeichnet, daß die Meßschaltung (24) aus einem zwischen der negativen Anschlußklemme der Gleichrichterschaltung (20) und Masse liegenden Widerstand (24) besteht.

4. Auslöser nach Anspruch 2 oder 3 für einen Mehrpol-Leistungsschalter, dadurch gekennzeichnet, daß der Strommeßkreis pro Pol einen Stromwandler (16R, 16S, 16T) umfaßt und der Gleichrichterkreis (20) aus einer Reihenschaltung von Zweiweg-Brückengleichrichtern (20R, 20S, 20T) besteht, deren Eingänge mit den entsprechenden Ausgängen der Stromwandler verbunden sind.

5. Auslöser nach Anspruch 1 für einen Mehrpol-Leistungsschalter, dadurch gekennzeichnet, daß der Strommeßkreis pro Pol einen Stromwandler (16R, 16S, 16T) umfaßt, die Gleichrichter-, Meß- und Stromversorgungsschaltung (18) aus mehreren, mit den genannten Polen verbundenen Brückengleichrichtern (20R, 20S, 20T) besteht, deren Eingänge mit den jeweils zugeordneten Stromwandlern verbunden sind, und jeder einem Pol zugeordnete Brückengleichrichter mit einem zugehörigen Meßwiderstand (24R, 24S, 24T) in Reihe liegt, wobei jeder Meßwiderstand einerseits mit den Anschlußklemmen einer gemeinsamen Stromversorgungsschaltung (22) und mit Masse sowie andererseits mit der Kathode einer zugeordneten Diode (D1, D2, D3) verbunden ist, deren Anoden mit der Kathode des Thyristors (34) verbunden sind, so daß nur die Meßspannung mit der größten Amplitude an die Kathode des Thyristors gelangt.

6. Auslöser nach einem der Ansprüche 1 bis 5, dadurch gekennzeichnet, daß er einen ersten Begrenzungswiderstand (R1) aufweist, der zwischen die Ausgangsklemme der elektronischen Signalverarbeitungseinheit und den Gate-Anschluß des Thyristors (34) geschaltet ist.

7. Auslöser nach einem der Ansprüche 1 bis 6, dadurch gekennzeichnet, daß er einen zweiten Begrenzungswiderstand (R2) aufweist, der in Reihe mit der Zenerdiode zwischen den Gate-Anschluß des Thyristors und Masse geschaltet ist.

8. Auslöser nach einem der Ansprüche 1 bis 6, dadurch gekennzeichnet, daß er eine Schaltung zur vorübergehenden Änderung des Schwellwerts für die unverzögerte Auslösung aufweist, die aus einem zweiten, zwischen die Kathode der Zenerdiode und Masse geschalteten Widerstand (R2) und einem dritten, in Reihe mit einem Kondensator (C5) zwischen der Kathode der Zenerdiode und der Kathode (38) des Thyristors liegenden Widerstand (R5) besteht.

9. Auslöser nach Anspruch 8, dadurch gekennzeichnet, daß er einen hoch bemessenen, vierten Widerstand (R6) aufweist, der als Entladewiderstand dient und parallel zum Kondensator C5 geschaltet ist.

10. Auslöser nach Anspruch 8 oder 9, dadurch gekennzeichnet, daß er eine Diode (46) aufweist, die mit dem dritten Widerstand (R5) und dem Kondensator (C5) in Reihe geschaltet ist.

**Claims**

1. A solid-state trip device for an electrical circuit breaker (10) comprising a current detection circuit (16) delivering analog signals proportional to the current flowing through the conductors (12) to be protected, a rectifier, measurement and power supply circuit (18) connected to the current detection circuit and delivering between measurement terminals (28, 36) at least one measurement voltage (Vm), an electronic processing unit (26), supplied by the rectifier, measurement and power supply circuit (18), and to which the measurement voltage (Vm) is applied so that it delivers on an output terminal, with or without a time delay, a circuit breaker tripping order in the event of preset pick-ups being exceeded by said measurement voltage, a trip coil (14) mounted in series with a thyristor (34) being supplied by the rectifier, measurement and power supply circuit (18), the output terminal of the electronic processing circuit unit (26) being connected to the thyristor gate, in such a way that the trip coil (14) causes the circuit breaker (10) to open when a tripping order is delivered by the electronic processing unit, a trip device characterized by the fact that the thyristor (34) is mounted with a floating cathode, the measurement voltage (Vm) being applied between the ground and the cathode (38) of the thyristor, a Zener diode (40) whose anode is connected to the thyristor gate and whose cathode is connected to the ground determining an instantaneous tripping pick-up of the trip device.

2. The trip device according to claim 1, characterized by the fact that the rectifier, measurement and power supply circuit (18) comprises a rectifier circuit (20) whose inputs are connected to the outputs of the current detection circuit, a power supply circuit (22) being arranged in series with a measurement circuit (24), delivering the measurement voltage (Vm), between the positive and negative output terminals of the rectifier circuit, the point common supply (22) and measurement (24) circuits being connected to the ground.

3. The trip device according to claim 2, characterized by the fact that the measurement circuit (24) is formed by a resistor (24) connected between the negative terminal of the rectifier circuit (20) and the ground.

4. The trip device according to claim 2 and 3 for a multipole electrical circuit breaker, characterized by the fact that the current detection circuit comprises one current sensor (16 R, 16 S, 16T) per pole, the rectifier circuit (20) being formed by series connection of full-wave rectifier bridges (20 R, 20 S, 20 T) whose inputs are respectively connected to the outputs of the associated current sensor.

5. The trip device according to claim 1, for a multipole electrical circuit breaker, characterized by the fact that the current detection circuit comprises one current sensor (16 R, 16 S, 16 T) per pole, the rectifier, measurement and power supply circuit (18) comprising a plurality of rectifier bridges (20 R, 20 S, 20 T) respectively associated with said poles, and whose inputs are respectively connected to the outputs of the associated current sensor, a rectifier bridge associated with a pole being connected in series with an independent measuring resistor (24 R, 24 S, 24 T) associated with the terminals of a common power supply circuit (22), the ends of the measuring resistors connected to the power supply circuit being connected to the ground, the other ends of measuring resistors being respectively connected to the cathodes of a plutality of associated diodes (D1, D2, D3) whose anodes ate connected to the cathode of the thyristor (34) in such a way that only the measurement voltage of largest amplitude is applied to the cathode of the thyristor.

6. The trip device according to anyone of claims 1 to 5, characterized by the fact that it comprises a first limiting resistor (R1) between the output terminal of the electronic processing unit and the gate of the thyristor (34).

7. The trip device according to any one of claims 1 to 6, characterized by the fact that it comprises a second limiting resistor (R2) in series with the Zener diode, between the gate of the thyristor and the ground.

8. The trip device according to anyone of claims 1 to 6, characterized by the fact that it comprises a tempory modification circuit of the instantaneous tripping pick-up comprising a second resistor (R2) fitted between the cathode of the Zener diode and the ground, a third resistor (R5) being fitted in series with a capacitor (C5) between the cathode of the Zener diode and the cathode (38) of the thyristor.

9. The trip device according to claim 8, characterized by the fact that it comprises a fourth discharging resistor (R6), of high value, in parallel with the capacitor (C5).

10. The trip device according to anyone of claims 8 and 9,characterized by the fact that it comprises a diode (46) connected in series with the third resistor (R5) and the capacitor (C5).

Fig. 1

Fig . 2

Fig . 3

EP 0 326 459 B1

Fig . 4

Fig . 5